# EUROPEAN PATENT APPLICATION

(11) **EP 1 262 504 A1**
(43) Date of publication of application: **04.12.2002**
(21) Application number: 02010148.1
(22) Date of filing: 13.05.2002
(51) Int. Cl.: C08G 18/83, C08G 18/82

(54) **A process for making bloom-free thermoplastic polyurethane compositions**

(30) Priority: 25.05.2001 US 865322
(71) Applicant: Bayer Corporation, Pittsburgh, PA 15205 (US)
(72) Inventor: Chan, Jack C., Coraopolis, PA 15108 (US); Nardo, Nicholas R., Weirton, WV 26062 (US); Rieck, James N., Wheeling, WV 26003 (US); Jupa, Joseph M., New Martinsville, WV 26155 (US)
(74) Representative: Perchenek, Nils, Dr.

(57) **Abstract**

A method for making a bloom-free thermoplastic polyurethane is disclosed. The method entails blending a chain terminator such as monofunctional alkylene alcohol having at least 14 carbon atoms, monoisocyanate and mono-amine, in a thermoplastic polyurethane that would, but for the blending of the chain terminator of the invention, feature a blooming defect. The polyurethane suitable for the use in the inventive process is the product of a reaction wherein reactants comprise (i) at least one hydroxy functional polyol such as polyester polyol, polyether polyol and polycarbonate polyol, having a number average molecular weight of 500 to 5000 and a hydroxyl functionality of at least 2, (ii) a chain extending compound, and (iii) an organic diisocyanate. The ratio NCO/H characterizing the relative amounts of named reactants is 0.95 to 1.05. The addition of the chain terminator renders the product bloom-free.

## Description

### BACKGROUND OF THE INVENTION

The present invention relates to thermoplastic polyurethane resins characterized by reduced or eliminated surface haze (blooming).

The phenomenon of "blooming", which is also referred to as "surface haze" in the context of articles molded of polyurethane resins, has long been recognized in the art. The degree of blooming and the effectiveness of corrective methods are determined by observation. One technique for determining the degree of blooming is to extrude the polyurethane composition to form a strand and then monitor the surface haze of that strand over a period of several days. The development of haze, the time in which development of the haze occurs and the extent of the haze enable the skilled artisan to distinguish between compositions on the basis of their susceptibility to blooming.

Products such as elastomers, thermoplastically molded articles and textile coatings are known to develop this surface imperfection and means for alleviating this problem have long been sought. U.S. Patent 5,491,211 disclosed a bloom-free thermoplastic polyurethane (TPU) composition. In this TPU, prepared of presently relevant reactants, the key NCO/H ratio is based on the inclusion of a chain terminator.

### SUMMARY OF THE INVENTION

A method for making a bloom-free thermoplastic polyurethane is disclosed. The method entails blending a chain terminator such as monofunctional alkylene alcohol having at least 14 carbon atoms, mono-isocyanate and mono-amine, in a thermoplastic polyurethane that would, but for the blending of the chain terminator of the invention, feature a blooming defect. The polyurethane suitable for the use in the inventive process is the product of a reaction wherein reactants comprise (i) at least one hydroxy functional polyol such as polyester polyol, polyether polyol and polycarbonate polyol, having a number average molecular weight of 500 to 5000 and a hydroxyl functionality of at least 2, (ii) a chain extending compound, preferably one conforming to the formula

HO-R"-OH

where R" denotes an alkylene radical, and (iii) an organic diisocyanate. The ratio NCO/H, characterizing the relative amounts of the named reactants, is 0.95 to 1.05. The addition of the chain terminator renders the product bloom-free.

### DETAILED DESCRIPTION OF THE INVENTION

The present invention is based upon the finding that a polyurethane composition that is otherwise susceptible to blooming is rendered suitable for making molded articles that are bloom-free by blending the composition with a chain terminator. The process entails blending the chain terminator before molding the composition into articles, including molding by thermoplastic processes such as injection molding or extrusion.

The process of the present invention yields polyurethane products characterized by significantly reduced or totally eliminated blooming. These improved properties are achieved by adding a sufficient amount of at least one chain terminator into the product of a reaction mixture, which includes as reactants a polyol, a chain extender and a diisocyanate. Importantly, the ratio of isocyanate groups to isocyanate-reactive groups of the named reactants (NCO/H, also referred to as "NCO index") is 0.95 to 1.05.

The preparation of thermoplastic polyurethane using the named reactants is well known in the art and extensively documented. Any of the known processes are suitable for making TPU suitable for being rendered virtually bloom free in accordance with the invention.

Any of the known diisocyanates may be used in the practice of the present invention. Aliphatic, cycloaliphatic, araliphatic, heterocyclic and aromatic diisocyanates such as are described in Justus Liebigs Annalen der Chemie [Annals of Chemistry], 562, pp. 75-136, are, for example, considered as organic diisocyanates A). The following may be named as individual examples: aliphatic diisocyanates such as hexamethylene diisocyanate, cycloaliphatic diisocyanates such as isophorone diisocyanate, 1,4-cyclohexane diisocyanate, 1-methyl-2,4-cyclohexane diisocyanate and 1-methyl-2,6-cyclohexane diisocyanate, and the corresponding isomer mixtures, 4,4'-dicyclohexylmethane diisocyanate, 2,4'-dicyclohexylmethane diisocyanate and 2,2'-dicyclohexylmethane diisocyanate, and the corresponding isomer mixtures, aromatic diisocyanates such as 2,4-tolylene diisocyanate, mixtures of 2,4-tolylene diisocyanate and 2,6-tolylene diisocyanate, 4,4'-diphenylmethane diisocyanate, 2,4'-diphenylmethane diisocyanate and 2,2'-diphenylmethane diisocyanate, mixtures of 2,4'-diphenylmethane diisocyanate and 4,4'-diphenylmethane diisocyanate, urethane-modified liquid 4,4'-diphenylmethane diisocyanates and 2,4'-diphenylmethane diisocyanates, 4,4'-diisocyanato diphenylethane-(1,2) and 1,5-naphthalene diisocyanate. The following are preferably used: 1,6-hexamethylene diisocyanate, isophorone diisocyanate, dicyclohexylmethane diisocyanate, diphenylmethane diisocyanate isomer mixtures having a 4,4'-diphenylmethane diisocyanate content of >96 wt.% and in particular 4,4'-diphenylmethane diisocyanate and 1,5-naphthalene diisocyanate. The diisocyanates named may be used in either single or intermixed manner. They may also be used together with up to 15 wt.% (with reference to the total quantity of diisocyanate) of a polyisocyanate, for example, triphenylmethane-4,4',4"-triisocyanate or polyphenyl polymethylene polyisocyanates. The preferred diisocyanate is diphenylmethane-4,4'-diisocyanate (MDI) which is well known in the art and readily available in commerce.

The hydroxy functional polyol suitable in the present context is a linear hydroxyl-terminating polyol having a number average molecular weight of 500 to 5000 g/mol. These frequently contain small quantities of non-linear compounds by reason of their production process. For this reason reference is commonly made to "substantially linear polyols". Polyester polyols, polyether polyols, polycarbonate polyols or mixtures thereof are preferred. Most preferred are polyester diols, polyether diols and polycarbonate diols.

Suitable polyether polyols may be prepared by reacting one or more alkylene oxides having 2 to 4 carbon atoms in the alkylene radical with an initiator molecule containing two bonded active hydrogen atoms. Examples of alkylene oxides, which may be named, are ethylene oxide, 1,2-propylene oxide, epichlorohydrin and 1,2-butylene oxide and 2,3-butylene oxide. Ethylene oxide, propylene oxide and mixtures of 1,2-propylene oxide and ethylene oxide are preferably used. The alkylene oxides may be used singly, alternately or as mixtures. Examples of initiator molecules, which are considered, are water, aminoalcohols such as N-alkyl diethanolamines, for example, N-methyl diethanolamine, and diols such as ethylene glycol, 1,3-propylene glycol, 1,4-butanediol and 1,6-hexanediol. Mixtures of initiator molecules may optionally also be used. Suitable polyether polyols are also the hydroxyl group-containing polymerization products of tetrahydrofuran. Trifunctional polyethers may also be used in quantities of from 0 to 30 wt.%, with reference to the bifunctional polyethers, the maximum quantity whereof being, however, such that a product results which is thermoplastically processable. The substantially linear polyether polyols have number average molecular weights of 500 to 5000 g/mol. They may be used both in single and intermixed manner.

Suitable polyester polyols may, for example, be prepared from dicarboxylic acids having 2 to 12 carbon atoms, preferably 4 to 6 carbon atoms, and polyhydric alcohols. Examples of dicarboxylic acids which are considered are aliphatic dicarboxylic acids such as succinic acid, glutaric acid, adipic acid, suberic acid, azelaic acid and sebacic acid, and aromatic dicarboxylic acids such as phthalic acid, isophthalic acid and terephthalic acid. The dicarboxylic acids may be used singly or as mixtures, for example, in the form of a succinic, glutaric and adipic acid mixture. It may optionally be advantageous for preparing the polyester polyols to use instead of the dicarboxylic acids the corresponding dicarboxylic acid derivatives such as carboxylic acid diesters having 1 to 4 carbon atoms in the alcohol radical, carboxylic acid anhydrides or carboxylic acid chlorides.

Diols or diamines having a molecular weight of 60 to 500 g/mol are used as the preferred chain extenders. The preferred chain extenders are aliphatic diols having 2 to 14 carbon atoms, such as, for example, ethanediol, 1,6-hexanediol, diethylene glycol, dipropylene glycol and in particular 1,4-butanediol. Also, diesters of terephthalic acid with glycols having 2 to 4 carbon atoms, such as, for example, terephthalic acid bis(ethylene glycol) or terephthalic acid bis(1,4-butanediol), hydroxyalkylene ethers of hydroquinone, such as, for example, 1,4-di(hydroxyethyl) hydroquinone, ethoxylated bisphenols, (cyclo)aliphatic diamines such as, for example, isophoronediamine, ethylenediamine, 1,2-propylenediamine, 1,3-propylenediamine, N-methylpropylene-1,3-diamine, N,N'-dimethyl ethylenediamine, and aromatic diamines, such as, for example, 2,4-tolylenediamine and 2,6-tolylenediamine, 3,5-diethyl-2,4-tolylenediamine and 3,5-diethyl-2,6-tolylenediamine and primary mono-, di-, tri- or tetraalkyl-substituted 4,4'-diaminodiphenylmethanes, are also suitable. Mixtures of the aforementioned chain extenders may also be used. Smaller quantities of triols may also be added.

The preferred chain extenders useful in the practice of the present invention include those represented by the formula

HO-R"-OH (2)

in which
R" represents an alkylene radical, preferably an alkylene radical having an even number of carbon atoms.
Specific examples of the preferred chain extenders include: 1,4-butanediol, 1,6-hexanediol, and diols, which produce crystalline hardblock from the reaction of MDI and the diol. 1,4 butanediol is the preferred chain extender.

In the practice of the present invention, it is important that the TPU is a reaction product of the named hydroxy functional polyol, chain extender and diisocyanate where the NCO index is 0.95 to 1.05.

The chain terminator to be blended with the TPU of the invention include at least one monofunctional compound selected from the group consisting of alkylene alcohol having at least 14 carbon atoms, monoisocyanates, and monoamines. Monofunctional alcohols are preferred. Suitable monoalcohols are non-aromatic and have a chain length of at least 14, preferably from 14 to 22, most preferably about 18 carbon atoms. The most preferred alcohol is stearyl alcohol (octadecanol). The chain terminator is generally introduced into the TPU in an amount of 0.01 to about 0.8, preferably 0.05 to 0.6 percent relative to the weight of the TPU.

Any of the known additives that are known for their function in the context of TPU and any processing aids may be included in the polyurethanes produced in accordance with the present invention. Examples of suitable additives include stabilizers, processing aids, fillers and reinforcing agents.

Having thus described the invention, the following Examples are given as being illustrative thereof. All parts and percentages given in these Examples are parts by weight and percentages by weight, unless otherwise indicated.

### EXAMPLES

A thermoplastic polyurethane (TPU) was prepared by reacting 100 parts polybutylene adipate (hydroxy functionality = 2; molecular weight = 2,000), 9.9 parts 1,4-butanediol, and 40.0 parts MDI (NCO/OH = 1.00) in a conventional reaction extrusion process under routine and known processing conditions. Conventional heat stabilizers and processing aids that were included in the TPU in functional amounts are not believed critical in the context of the invention.

### Example 1

The TPU prepared as above, containing no stearyl alcohol, was reextruded in a 30mm twin screw extruder and served as and is designated control.

### Example 2

Stearyl alcohol, was blended into the TPU prepared as above, in an amount of 0.4% relative to the weight of the TPU. The blend was reextruded in a 30mm twin screw extruder.

### Example 3

Stearyl alcohol, was blended into the TPU prepared as above, in an amount of 0.8% relative to the weight of the TPU. The blend was reextruded in a 30mm twin screw extruder.

For Examples 1-3, the extrusion temperatures were 200-241°C. Test specimens in the form of injection molded plaques 1/8" thick were used for measuring the physical properties of the TPU of Examples 1-3. The optical properties were measured on 1/8" thick injection molded plaques from a polished mold. The other reported properties were characterized using pellets after compounding.

Haze is a measure of blooming.

Example 1, without any stearyl alcohol, shows relatively heavy blooming (22.2% haze, increased from 6.58%) after 20 weeks of aging at 25°C. Both Examples 2 and 3, showing very slight increases in haze, are virtually bloom-free.

The level of stearyl alcohol affects the molecular weight, the molecular weight distribution, the melt viscosity, and the melt flow in a systematic way. The physical properties are, however, not reduced significantly by the addition of stearyl alcohol.

| The table below summarizes the results. | | | |
|---|---|---|---|
| **Example** | 1 | 2 | 3 |
| **% Stearyl Alcohol** | 0 | 0.4 | 0.8 |
| **% Total Light Transmission** | | | |
| days at 38°C | | | |
| 0 | 86.1 | 85.0 | 84.8 |
| 3 | 86.0 | 84.9 | 84.8 |
| 7 | 85.8 | 84.7 | 84.7 |
| 14 | 85.9 | 84.9 | 85.0 |
| 21 | 85.9 | 84.9 | 85.0 |
| 28 | 85.3 | 84.3 | 84.4 |

| weeks at 25°C | | | |
|---|---|---|---|
| 0 | 86.1 | 85.0 | 84.8 |
| 20 | 86.3 | 85.7 | 86.0 |

| **Haze, %** | | | |
|---|---|---|---|
| days at 38°C | | | |
| 0 | 6.58 | 4.42 | 4.46 |
| 3 | 6.70 | 4.45 | 4.75 |
| 7 | 7.54 | 5.36 | 5.63 |
| 14 | 7.45 | 5.72 | 6.10 |
| 21 | 7.42 | 5.74 | 6.20 |
| 28 | 38.10 | 22.20 | 21.80 |

| weeks at 25°C | | | |
|---|---|---|---|
| 0 | 6.58 | 4.42 | 4.46 |
| 20 | 22.20 | 5.92 | 5.42 |

| **Melt Viscosity, Pa-s at 190C** | | | |
|---|---|---|---|
| at shear rate (1/s) | | | |
| 1678.3 | 527.1 | 410.8 | 367.2 |
| 668.9 | 999.9 | 810.7 | 695.9 |
| 340.5 | 1,619.8 | 1,299.5 | 1,052.9 |
| 170.3 | 2,582.0 | 1,968.2 | 1,433.1 |
| 73 | 4,087.3 | 2,813.3 | 2,066.8 |
| 36.5 | 5,316.5 | 3,318.4 | 2,257.0 |
| 12.2 | 8,094.6 | 4,766.6 | 3,030.7 |

| **Melt Stability, at 73 1/s shear rate** | | | |
|---|---|---|---|
| viscosity (Pa·s) after dwell time (min.) | | | |
| 11 | 3,748.0 | 2,391.3 | 1,743.9 |
| 35.7 | 2,977.9 | 1,729.5 | 1,320.3 |
| 65.4 | 2,634.3 | 1,627.2 | 1,168.5 |

| **MFI, g/10min., at 8.7 kg load** | | | |
|---|---|---|---|
| 180 | no flow | 3.47 | 8.11 |
| 190 | 4.04 | 9.98 | 19.81 |
| 200 | 10.3 | 24.7 | 41.8 |

| **Molecular Weight, g/mole** | | | |
|---|---|---|---|
| Mn | 122,600 | 100,700 | 84,800 |
| Mw | 291,600 | 230,900 | 188,000 |
| Mz | 566,500 | 438,200 | 354,700 |
| Polydispersity | 2.38 | 2.29 | 2.22 |

| **Tensile, psi** | | | |
|---|---|---|---|
| 0 days at 38°C | 5,820 | 5,490 | 5,220 |
| 30 days at 38°C | 5,750 | 5,770 | 4,990 |

| **Elongation, %** | | | |
|---|---|---|---|
| 0 days at 38°C | 560 | 530 | 580 |
| 30 days at 38°C | 780 | 790 | 790 |

| **Die C Tear, pli** | | | |
|---|---|---|---|
| 0 days at 38°C | 493 | 494 | 494 |
| 30 days at 38°C | 780 | 790 | 790 |

It is within the skill in the art to practice this invention in numerous modifications and variations in light of the above teachings. It is understood that the various embodiments of this invention described herein may be altered without departing from the spirit and scope of this invention as defined by the following claims.

## Claims

1. A method for making a bloom-free thermoplastic polyurethane comprising blending an amount of a chain terminator selected from the group consisting of monofunctional alkylene alcohol having at least 14 carbon atoms, mono-isocyanate and mono-amine, in a thermoplastic polyurethane, said polyurethane being the product of a reaction wherein reactants comprise
(i) at least one hydroxy functional polyol selected from the group consisting of polyester polyol, polyether polyol and polycarbonate polyol, having a number average molecular weight of 500 to 5000 and a hydroxyl functionality of at least 2,
(ii) a chain extending compound selected from the group consisting of diols and diamines having a molecular weight of 60 to 500 g/mol,
(iii) an organic diisocyanate,
wherein said (i), (ii) and (iii) are present in the reaction in such amounts that the ratio NCO/H therebetween is 0.95 to 1.05, said amount of chain terminator being sufficient to render said product bloom-free.

2. The method of Claim 1 wherein chain terminator is at least one monofunctional alkylene alcohol having at least 14 carbon atoms.

3. The method of Claim 1 wherein hydroxy functional polyol is polyester polyol.

4. The method of Claim 1 wherein hydroxy functionality is 2.

5. The method of Claim 1 wherein the organic diisocyanate is at least one member selected from the group consisting of 1,6-hexamethylene diisocyanate, isophorone diisocyanate, dicyclohexylmethane diisocyanate, diphenylmethane diisocyanate, and 1,5-naphthalene diisocyanate.

6. The method of Claim 5 wherein the diisocyanate is diphenylmethane-4,4'-diisocyanate.

7. The method of Claim 1 wherein the chain extender is a diol conforming to the formula
HO-R"-OH
where R" denotes an alkylene radical.

8. The method of Claim 7 wherein chain extender is at least one member selected from the group consisting of ethanediol, 1,6-hexanediol, diethylene glycol, dipropylene glycol and butanediol.

9. The method of Claim 1 wherein monoalcohols are non-aromatic.

10. The method of Claim 1 wherein monoalcohols have 14 to 22 carbon atoms.

11. The method of Claim 1 wherein chain terminator is stearyl alcohol.

12. The method of Claim 1 wherein amount of chain terminator is 0.01 to 0.8 percent relative to the weight of the TPU.
